# EUROPÄISCHE PATENTSCHRIFT

(11) **EP 4 414 675 B1**
(45) Veröffentlichungstag und Bekanntmachung des Hinweises auf die Patenterteilung: **16.07.2025**
(21) Anmeldenummer: 23156144.0
(22) Anmeldetag: 10.02.2023
(51) Int. Cl.: G01K 1/022, G01K 3/04

(54) **TEMPERATURINDIKATOR ZUM FORTWÄHRENDEN ÜBERWACHEN DES HALTENS EINER IN DER UMGEBUNG DES TEMPERATURINDIKATORS HERRSCHENDEN TEMPERATUR, DIESBEZÜGLICHES VERFAHREN UND COMPUTERPROGRAMM**
TEMPERATURE INDICATOR THAT CONTINUOUSLY MONITORS THE HOLDING OF A TEMPERATURE IN THE VICINITY OF THE TEMPERATURE INDICATOR, ASSOCIATED METHOD AND COMPUTER PROGRAM
INDICATEUR DE TEMPÉRATURE POUR SURVEILLER DE FAÇON CONTINUE LE MAINTIEN D'UNE TEMPÉRATURE DANS L'ENVIRONNEMENT DE L'INDICATEUR DE TEMPÉRATURE, PROCÉDÉ ET PROGRAMME INFORMATIQUE ASSOCIÉS

(43) Veröffentlichungstag der Anmeldung: 14.08.2024
(73) Patentinhaber: Militaru, Ciprian, 70374 Stuttgart (DE)
(72) Erfinder: Militaru, Ciprian, 70374 Stuttgart (DE)
(74) Vertreter: Beyer, Carsten

(56) Entgegenhaltungen:
- WO-A1-2018/142190
- US-A1- 2003 219 061
- US-B2- 9 976 801

## Beschreibung

Die Erfindung betrifft zunächst einen Temperaturindikator nach dem Oberbegriff von Anspruch 1.

Danach betrifft die Erfindung einen Temperaturindikator zum fortwährenden Überwachen des Haltens einer in der Umgebung des Temperaturindikators herrschenden Temperatur innerhalb eines ersten voreingestellten Temperaturbereichs, wobei der Temperaturindikator mechanisch betätigbare Bedienelemente umfasst, wobei an dem Temperaturindikator über eines der mechanisch betätigbaren Bedienelemente mindestens ein zweiter Temperaturbereich voreinstellbar ist, welcher sich von dem ersten Temperaturbereich unterscheidet, und welcher nach Betätigen des Bedienelements anstelle des ersten Temperaturbereichs durch den Temperaturindikator überwachbar ist.

Ferner betrifft die Erfindung gemäß Anspruch 9 ein Verfahren zum fortwährenden Überwachen, mittels eines Temperaturindikators, des Haltens einer in der Umgebung des Temperaturindikators herrschenden Temperatur innerhalb eines voreingestellten Temperaturbereichs.

Des Weiteren betrifft die Erfindung ein diesbezügliches Computerprogramm nach Anspruch 11 sowie ein computerlesbares Medium nach Anspruch 12.

Eingangs genannte Temperaturindikatoren sind in unterschiedlichen Ausführungen und mit variierendem Funktionsumfang bekannt. So ist ein gattungsgemäßer Temperaturindikator aus WO 2018/142190 A1 bekannt. Weitere Temperaturindikatoren sind aus US 9 976 801 B2 und US 2003/219061 A1 bekannt.

Temperaturindikatoren ermöglichen insbesondere die zuverlässige Temperaturüberwachung für temperaturempfindliche Produkte während des Transportes und der Lagerung, und dienen zum sofortigen Erkennen und zum diesbezüglichen Nachweis, ob das gelieferte Produkt während des Transports oder der Lagerung nicht vorschriftsmäßigen Temperaturen ausgesetzt war.

Insofern werden Temperaturindikatoren insbesondere im Pharmabereich, beim Transport und der Lagerung von Blutkonserven, im Lebensmittelbereich, und vielen anderen Gebieten eingesetzt, wo es auf die Einhaltung von Kühlketten ankommt.

Somit lässt sich die Einhaltung von Kühlketten verbessern und Schäden an temperaturempfindlichen Gütern lassen sich vermeiden. Sofern eine Kühlkette in nicht vorschriftsmäßiger Weise unterbrochen worden sein sollte, sichert ein Temperaturindikator die Beweiskette, und der Schaden lässt sich dem Verursacher zuordnen.

Muss anhand eines Temperaturindikators festgestellt werden, dass eine Kühlkette nicht in vorschriftsmäßiger Weise eingehalten worden ist, können somit nicht mehr verkehrsfähige Produkte sofort unschädlich gemacht werden und gelangen gar nicht mehr zum Verbraucher. Insofern ist der Einsatz von Temperaturindikatoren im oben bereits genannten medizinischen und pharmazeutischen Bereich bereits eine grundlegende Notwendigkeit. Alternativ können fragliche Produkte, welche aufgrund der Anzeige des Temperaturindikators zunächst als zweifelhaft erscheinen, aus diesem Anlass noch einmal einer bakteriologischen Untersuchung zugeführt werden, und können danach je nach Ergebnis verworfen oder doch noch weiterverwendet werden.

Darüber hinaus entfaltet das Wissen um das Vorhandensein von Temperaturindikatoren in der gelagerten und/oder transportierten Ware bei dem hieran beteiligten Personal bereits insofern eine psychologische Wirkung, dass etwaige Nachlässigkeiten bei der Einhaltung der Kühlkette gar nicht erst erwogen werden, da deren Nachweisbarkeit durch die eingesetzten Temperaturindikatoren ohne Zweifel gegeben ist.

Temperaturindikatoren sind i.A. dazu vorgesehen, direkt an die gelagerten bzw. transportierten Produkte positioniert zu werden, mit anderen Worten zusammen mit diesen gelagert bzw. transportiert zu werden, um somit über die Temperatur in der Umgebung des Temperaturindikators auch die Temperatur der Produkte zu erfassen.

Es sind Temperaturindikatoren bekannt, welche zur einmaligen oder zur mehrfachen Verwendung konzipiert sind.

Ein bekannter Einweg-Temperaturindikator, welcher unter der Bezeichnung "TI-10" vermarktet wird, weist dabei einen werkseitig voreingestellten Temperaturbereich auf, den die Vorrichtung überwachen kann, z.B. 2-8 °C. Ein solcher Temperaturbereich wird vorliegend als erster voreingestellter Temperaturbereich bezeichnet.

Der bekannte Temperaturindikator umfasst zumindest eine Stromquelle, einen Mikroprozessor mit Mitteln zur Ausführung eines Verfahrens zur Überwachung des voreingestellten Temperaturbereichs, und einen Temperaturmessfühler. Ferner ist ein Bedienelement (Startknopf) zum Starten des Messvorgangs implementiert. Die Messwerterfassung startet dabei nach Bedienen des Startknopfs um 10 min verzögert. Schließlich sind zwei optische Anzeigen realisiert, nämlich eine grüne LED (OK) zur Anzeige der vorschriftsmäßigen Einhaltung des Temperaturbereichs während der Überwachung, und eine rote LED (Alarm) zur Anzeige, falls die gemessene Temperatur nicht während der gesamten Überwachung innerhalb des ersten voreingestellten Temperaturbereichs gelegen hat.

Der interne Prozessor nimmt dabei ca. jede Minute den aktuellen Temperaturwert auf und vergleicht diesen mit dem voreingestellten Bereich. Liegt ein Wert außerhalb des Bereichs, wird die optische Anzeige für den Alarm aktiviert. Ansonsten bleibt die grüne Anzeige für OK aktiviert.

Es sind ferner Einweg- oder Mehrweg-Temperaturindikatoren bekannt, welche auch eine periodische Aufzeichnung der festgestellten Messwerte anbieten. Hierzu können Schnittstellen vorhanden sein, um die gespeicherten Messwerte auszulesen. Solche Vorrichtungen werden auch als Temperatur-Datenlogger oder als Temperaturlogger bezeichnet. Im Rahmen der vorliegenden Erfindung werden auch diese Vorrichtungen von dem hier verwendeten Begriff Temperaturindikator umfasst.

Aus dem Stand der Technik bekannte Temperaturindikatoren sind allerdings nachteilig in Bezug auf eine Vielseitigkeit und Variabilität des zu überwachenden Temperaturbereichs.

Ist ein Temperaturbereich in der Vorrichtung als erster voreingestellter Temperaturbereich werkseitig voreingestellt, lässt sich die betreffende Vorrichtung nicht für einen anderen, hiervon abweichenden Temperaturbereich nutzen.

Gängige Temperaturbereiche für die oben genannten Einsatzgebiete sind z.B. 2-8 °C und 15-25 °C. Der Verwender von Temperaturindikatoren muss daher, sofern er für die seinerseits insgesamt bearbeiteten Produkte verschiedene Temperaturbereiche für Lagerung und Transport abdecken muss, ebensolche verschieden voreingestellten Temperaturindikatoren beschaffen und vorhalten. Dies führt zu einem unnötigen Einsatz von Kapital und Lagerkapazität.

Ggf. müssen angeschaffte Temperaturindikatoren sogar ungenutzt entsorgt werden, falls deren vorgesehene Lebensdauer verstrichen ist, oder in ganz praktischer Hinsicht der Zustand der enthaltenen Batterie keinen länger andauernden Einsatz mehr zulässt. In so einem Fall wären das investierte Kapital verloren und wertvolle Ressourcen verschwendet.

Hält der Verwender auf der anderen Seite nur Temperaturindikatoren für einen bestimmten Temperaturbereich auf Lager, kann er in nachvollziehbarer Weise nicht kurzfristig Überwachungsaufgaben für einen anderen Temperaturbereich abdecken, er muss vielmehr erst hierfür geeignete Temperaturindikatoren beschaffen.

Es besteht bislang keine Möglichkeit, Temperaturindikatoren in situ, d.h. an dem Ort, wo die Lager- bzw. Transportaufgabe ihren Anfang nimmt, und/oder durch das mit dieser Aufgabe betraute Personal, und/oder schnell und in großen Mengen, an die jeweils individuell anstehende Überwachungsaufgabe anzupassen.

Der vorliegenden Erfindung liegt die Aufgabe zugrunde, die sich aus dem Stand der Technik ergebenden Nachteile zu überwinden.

Ferner liegt die Aufgabe zugrunde, in Bezug auf Temperaturindikatoren und deren überwachbarem Temperaturbereich eine größere Variabilität und eine raschere Anpassbarkeit, auch hinsichtlich einer großen Anzahl von Temperaturindikatoren, und/oder auch durch nicht hierfür speziell geschultes Personal, und/oder auch ohne hierfür speziell geeignete Ausrüstung, zu ermöglichen.

Diese Aufgabe wird gelöst durch einen Temperaturindikator der eingangs genannten Art, welcher durch die kennzeichnenden Merkmale von Anspruch 1 weitergebildet ist.

Weitere erfindungsgemäße Gegenstände, welche diese Aufgabe lösen, sind ein Verfahren nach den Merkmalen von Anspruch 9, ein Computerprogramm nach Anspruch 11, und ein computerlesbares Medium nach Anspruch 12.

Vorteilhafte Ausgestaltungen und Weiterbildungen der Erfindung sind Gegenstand der nachgeordneten Ansprüche.

Gemäß Anspruch 1 ist der eingangs genannte Temperaturindikator so weitergebildet, dass ein erstes mechanisch betätigbares Bedienelement zur Voreinstellung eines ersten Temperaturbereichs vorgesehen ist, und ein zweites mechanisch betätigbares Bedienelement zur Voreinstellung eines zweiten Temperaturbereichs vorgesehen ist, so dass nach einer Betätigung des ersten mechanisch betätigbaren Bedienelements der erste Temperaturbereich überwacht wird, und nach einer Betätigung des zweiten mechanisch betätigbaren Bedienelements der zweite Temperaturbereich überwacht wird.

Anspruch 9 beschreibt ein erfindungsgemäßes Verfahren zum fortwährenden Überwachen, mittels eines Temperaturindikators, des Haltens einer in der Umgebung des Temperaturindikators herrschenden Temperatur innerhalb eines voreingestellten Temperaturbereichs, umfassend: a) Ermöglichen einer Wahl des Benutzers bezüglich der Überwachung eines Temperaturbereichs über ein mechanisch betätigbares Bedienelement des Temperaturindikators, wobei über das Bedienelement die Voreinstellung eines zweiten Temperaturbereichs, welcher sich von einem ersten voreingestellten Temperaturbereich unterscheidet, anstelle des ersten Temperaturbereichs durchführbar ist, b) ggf. aktive Abfrage einer Wahl des Benutzers, c) Erkennen und Verarbeiten der Betätigung oder Nichtbetätigung des Bedienelements durch den Benutzer und entsprechende Voreinstellung des somit gewählten und zu überwachenden Temperaturbereichs, d) ggf. Erkennen und Verarbeiten einer seitens des Benutzers erfolgenden Betätigung zum Starten der Überwachung des gewählten Temperaturbereichs, e) fortlaufendes Überwachen des Haltens der in der Umgebung des Temperaturindikators herrschenden Temperatur innerhalb des gewählten Temperaturbereichs, wobei das Ermöglichen einer Wahl des Benutzers bezüglich der Überwachung eines Temperaturbereichs die Voreinstellung eines ersten Temperaturbereichs über ein erstes mechanisch betätigbares Bedienelement und die Voreinstellung eines zweiten Temperaturbereichs über ein zweites mechanisch betätigbares Bedienelement umfasst, so dass nach einer Betätigung des ersten mechanisch betätigbaren Bedienelements der erste Temperaturbereich überwacht wird, und nach einer Betätigung des zweiten mechanisch betätigbaren Bedienelements der zweite Temperaturbereich überwacht wird.

Das Verfahren kann vorzugsweise mit einem erfindungsgemäßen Temperaturindikator durchgeführt werden. Ferner weist das Verfahren vorzugsweise die Schritte in der oben angegebenen Reihenfolge a) bis e) auf.

Ein erfindungsgemäßes Computerprogramm nach Anspruch 11 umfasst Befehle, die bewirken, dass ein erfindungsgemäßer Temperaturindikator die Schritte des o.g. Verfahrens ausführt.

Das erfindungsgemäße Computerprogramm könnte dabei alternativ auch als Computerprogrammprodukt bezeichnet werden, ohne von dem Erfindungsgedanken abzuweichen.

Auf einem erfindungsgemäßen computerlesbaren Medium nach Anspruch 12 ist schließlich das vorgenannte Computerprogramm gespeichert.

Die vorliegende Erfindung schafft einen breiteren Einsatzbereich für Temperaturindikatoren, ohne dass in merklichem Ausmaß mehr Ressourcen benötigt werden. Temperaturindikatoren können so mit zwei oder mehr vorgegebenen Temperaturbereichen bereitgestellt werden, zwischen denen je nach aktuellem Bedarf mittels mindestens eines mechanischen Bedienelements eine Auswahl vorgenommen werden kann. So kann innerhalb eines Temperaturindikators bspw. eine Auswahl zwischen einem zu überwachenden Temperaturbereich von 2-8 °C und 15-25 °C angeboten werden. Solche Temperaturbereiche sind auf dem entsprechenden Gebiet jeweils für sich gesehen gängig.

Das Unternehmen, das Temperaturindikatoren verwendet, muss folglich nicht mehr zwei verschiedene Arten von Indikatoren beschaffen und zur Verfügung halten. Vielmehr genügt die Anschaffung eines einzigen Modells. Damit wird auch verhindert, dass gelagerte und bislang unbenutzte Temperaturindikatoren aufgrund einer Alterung der enthaltenen Batterie ungenutzt entsorgt werden müssen.

Die Voreinstellung des erfindungsgemäßen Temperaturindikators über das mechanisch betätigbare Bedienelement ist dabei sehr rasch und in großer Stückzahl möglich. Muss z.B. bei der Herstellung oder dem Transport eines Produkts in jeden Karton oder in jede Palette ein richtig voreingestellter Temperaturindikator gegeben werden, kann dies sehr rasch und ohne Fehlerquellen durchgeführt werden. Die Temperaturindikatoren können vor Ort je nach aktuell benötigtem Temperaturbereich voreingestellt und an oder in die zu überwachende Ware gegeben werden.

Ein großer Vorteil besteht ferner darin, dass die Voreinstellung des Temperaturbereichs ohne Probleme durch das vor Ort befindliche Personal vorgenommen werden kann, welches ansonsten mit der Verpackungs-, Lager- oder Transportaufgabe in Bezug auf die zu verarbeitende Ware betraut ist. Fachkenntnisse oder eine spezielle Ausrüstung sind dabei nicht erforderlich. Bevorzugt kann das mechanisch betätigbare Bedienelement dabei mit einem Finger eines Benutzers betätigt werden.

Eine etwaige Voreinstellung von Temperaturindikatoren auf unterschiedliche Temperaturbereiche mittels eines Computers oder dergleichen elektronischer Vorrichtung über eine Schnittstelle eines Temperaturindikators liegt dabei ausdrücklich nicht im Bereich der vorliegenden Erfindung, da die erfindungsgemäßen Vorteile damit gerade nicht erreicht werden. Eine solche Voreinstellung ist weder rasch und individuell, noch in großen Stückzahlen, noch durch ungeschultes Personal, noch ohne entsprechende Ausrüstung (nämlich sowohl Software als auch Hardware) und Fachkenntnisse, noch am Ort einer Lager- oder Transportaufgabe vornehmbar. Solche etwaigen Lösungen bilden daher auch keinen Ausgangspunkt für die vorliegende Erfindung.

Im Folgenden werden die erfindungsgemäßen Aspekte weiter erörtert, wozu teilweise auf nicht limitierende vorteilhafte Ausgestaltungen und Weiterbildungen der Erfindung Bezug genommen wird. Die Merkmale bereits erörterter und nachfolgender vorteilhafter Weiterbildungen lassen sich dabei einzeln oder auch in beliebiger Kombination realisieren, wodurch weitere vorteilhafte Ausgestaltungen der Erfindung geschaffen werden.

Im Rahmen der gesamten vorliegenden Erörterung von Ausgestaltungen, Weiterbildungen, Ausführungsbeispielen und Ausführungsformen der erfindungsgemäßen Vorrichtungen und Erzeugnisse werden auch Verfahren zum Einsatz der Vorrichtungen und Erzeugnisse sowie Verwendungen der erfindungsgemäßen Vorrichtungen und Erzeugnisse beschrieben. Diese Verfahren und Verwendungen liegen dabei ausdrücklich ebenfalls im Rahmen der vorliegenden Erfindung.

Die vorstehend und nachfolgend beschriebenen Merkmale vorteilhafter Weiterbildungen von erfindungsgemäßen Vorrichtungen lassen sich dabei in entsprechender Weise auch in erfindungsgemäßen Erzeugnissen, Verfahren und Verwendungen, und dabei einzeln oder auch in beliebiger Kombination, realisieren, wodurch noch weitere vorteilhafte Ausgestaltungen der Erfindung geschaffen werden.

In einer ersten bevorzugten Ausführungsform des erfindungsgemäßen Temperaturindikators weist das Bedienelement eine Taste, einen Hebel oder einen Knopf auf. Ein derartiges Bedienelement ist leicht zu identifizieren und zu betätigen, insbesondere mit einem Finger des Benutzers. Das Bedienelement kann hierzu ferner entsprechend beschriftet werden, insbesondere mit der Angabe des Temperaturbereichs, der mittels des Bedienelements voreinstellbar ist.

Es können zwei oder mehr mechanisch betätigbare Bedienelemente realisiert sein. Dabei kann jedem voreinstellbaren Temperaturbereich ein eigenes Bedienelement zugeordnet sein. Durch eine entsprechende Beschriftung kann ferner klar eine Verknüpfung zwischen dem jeweiligen Bedienelement und dem zugeordneten Temperaturbereich hergestellt werden. Somit ist die Wahrscheinlichkeit einer fehlerhaften Voreinstellung sehr gering.

Erfindungsgemäß ist ein erstes Bedienelement zur Voreinstellung eines ersten Temperaturbereichs vorgesehen, und ist ein zweites Bedienelement zur Voreinstellung eines zweiten Temperaturbereichs vorgesehen.

Es ist bevorzugt, dass ein betätigtes Bedienelement über dessen Betätigungszustand den derzeit voreingestellten Temperaturbereich anzeigen kann. So kann ein verschwenkter Hebel oder Schiebeschalter durch seine aktuelle Position klar den derzeit voreingestellten Temperaturbereich anzeigen. Entsprechendes gilt für einen Knopf oder eine Taste, der bzw. die nach der Betätigung eine versenkte Position einnimmt, und nach einer erneuten Betätigung wieder eine erhöhte Position einnimmt.

In einer weiteren vorteilhaften Ausführungsform ist eine optische Anzeige für den aktuell voreingestellten Temperaturbereich realisiert. Somit kann über eine etwaige Kontrolle des voreingestellten Temperaturbereichs über ein betätigtes Bedienelement hinaus eine sehr sichere Anzeige des derzeit voreingestellten Bereichs erfolgen. Hierzu kann vorzugsweise eine optische Anzeige, insbesondere eine LED, dienen. Weiter bevorzugt kann auf der Oberfläche des Temperaturindikators jedem voreinstellbaren Temperaturbereich eine eigene optische Anzeige zugeordnet werden, welche nach der entsprechenden Auswahl in Betrieb geht. Besonders bevorzugt ist jedem Temperaturbereich eine LED zugeordnet, welche durch ihren Betrieb den derzeit voreingestellten Bereich anzeigt.

In einer weiteren vorteilhaften Weiterbildung weist der Temperaturindikator gleichzeitig Mittel zur Aufzeichnung der gemessenen Temperaturwerte auf. Ein entsprechender Temperaturindikator könnte somit auch als Temperatur-Datenlogger oder als Temperaturlogger bezeichnet werden. Der Temperaturindikator kann bevorzugt ferner eine periodische Aufzeichnung der gemessenen Temperaturen anbieten, darüber hinaus kann der Zeitraum zwischen der Abnahme aufeinanderfolgender Messwerte vorzugsweise einstellbar sein.

Der Temperaturindikator weist vorzugsweise eine Datenschnittstelle auf. Dabei kann es sich insbesondere um eine USB-Schnittstelle oder um eine kabellose Schnittstelle, insbesondere Bluetooth oder NFC, handeln. Eine optionale Schnittstelle kann insbesondere zur Abfrage und zum Übertragen gespeicherter Temperaturmessverläufe dienen, sofern der Temperaturindikator oben angeführte Mittel zur Aufzeichnung gemessener Temperaturwerte aufweist. Über eine Schnittstelle können zusätzlich oder alternativ auch weitere Einstellungen oder Abfragen vorgenommen werden, bspw. das Aufspielen von aktualisierter Firmware bzw. eines Updates, das Durchführen eines Resets, oder die Abfrage des Batteriezustands.

In einer weiteren vorteilhaften Ausführungsform ist das mechanisch betätigbare Bedienelement als Bedienfeld auf einem Bildschirm des Temperaturindikators dargestellt. Hierzu ist erforderlich, dass der Temperaturindikator über einen entsprechenden Bildschirm oder ein solches Display verfügt. Das Bedienelement kann in einem solchen Fall vorzugsweise als Bedienfeld, als Tastfeld oder als Taste auf dem Bildschirm des Temperaturindikator dargestellt werden. Ein derart dargestelltes Bedienelement kann vorzugsweise durch Berühren, Drücken oder Wischen mit dem Finger des Benutzers bedienbar sein, nämlich ähnlich wie bei der Bedienung eines Smartphones oder Tablets.

In diesem Zusammenhang erweist sich auch eine Weiterbildung des erfindungsgemäßen Verfahrens als vorteilhaft, bei der das mechanisch betätigbare Bedienelement als Bedienfeld auf einem Bildschirm des Temperaturindikators dargestellt wird.

Eine entsprechende vorteilhafte Weiterbildung des erfindungsgemäßen Computerprogramms umfasst Befehle, die eine solche Darstellung bewirken.

Der Temperaturindikator weist vorzugsweise einen Prozessor, insbesondere einen Mikroprozessor, auf. Ein solcher Prozessor kann dabei insbesondere die Ermittlung der Temperaturmesswerte steuern, aber insbesondere auch die Auswahl des voreingestellten Temperaturbereichs anbieten und/oder verarbeiten und den entsprechenden Bereich bei dem nachfolgenden Betrieb zugrunde legen.

Der Temperaturindikator kann als Einweggerät oder als Mehrweggerät ausgestaltet sein.

Der Temperaturindikator weist vorzugsweise eine Stromquelle, insbesondere als Batterie, auf. Hierzu kann insbesondere bei einem Einweggerät eine handelsübliche Knopfzelle ausreichend sein.

Der Temperaturindikator weist vorzugsweise mindestens einen Temperaturfühler zur Aufnahme von Temperaturwerten auf. Der Temperaturfühler kann im Inneren der Vorrichtung verbaut sein. Alternativ kann der Temperaturfühler an der Oberfläche der Vorrichtung angeordnet sein.

Der Temperaturindikator weist vorzugsweise einen Startknopf auf, durch dessen Betätigung der Messvorgang auslösbar ist. Vorzugsweise ist dabei eine Zeitverzögerung zwischen der Betätigung des Startknopfes und dem tatsächlichen Beginn der Messwertaufnahme implementiert. Eine solche Zeitverzögerung kann vorzugsweise etwa 10 min oder länger betragen. Eine solche Zeitverzögerung gibt der Vorrichtung ausreichend Zeit, sich vor der Aufnahme des ersten Messwerts am vorgesehenen Ort zu akklimatisieren, so dass es aufgrund der vorherigen Handhabung und Betätigung des Geräts nicht zu falschen Messwerten und Fehlalarmen kommt. Ein Startknopf kann optional auch als einmal und irreversibel auslösbares Brechsiegel ausgestaltet sein.

Bevorzugt weist der Temperaturindikator eine optische Anzeige für den regelgerechten Betrieb der Vorrichtung innerhalb des voreingestellten Temperaturbereichs auf, und/oder weist eine optische Anzeige für die Anzeige des nicht regelgerechten Betriebs (Alarm) auf, nämlich falls der voreingestellte Temperaturbereich während der Erfassung von Temperaturmesswerten nicht eingehalten worden ist. So kann die Vorrichtung insbesondere eine grüne LED aufweisen, welche bei Einhaltung der Parameter fortdauernd leuchten oder blinken kann, und kann eine rote LED aufweisen, welche nach Eintritt eines Alarmfalls fortdauernd leuchten oder blinken kann. Vorzugsweise ist eine optische Anzeige eines solchen Alarmzustands nicht durch den Benutzer abstellbar, um Manipulationen zu vermeiden.

Ein weiteres erfindungsgemäßes Verfahren zum fortwährenden Überwachen, mittels eines Temperaturindikators, des Haltens einer in der Umgebung des Temperaturindikators herrschenden Temperatur innerhalb eines voreingestellten Temperaturbereichs, umfasst: a) Ermöglichen einer Wahl des Benutzers bezüglich der Überwachung eines Temperaturbereichs über ein mechanisch betätigbares Bedienelement des Temperaturindikators, wobei über das Bedienelement die Voreinstellung eines zweiten Temperaturbereichs, welcher sich von einem ersten voreingestellten Temperaturbereich unterscheidet, anstelle des ersten Temperaturbereichs durchführbar ist, c) Erkennen und Verarbeiten der Betätigung oder Nichtbetätigung des Bedienelements durch den Benutzer und entsprechende Voreinstellung des somit gewählten und zu überwachenden Temperaturbereichs, e) fortlaufendes Überwachen des Haltens der in der Umgebung des Temperaturindikators herrschenden Temperatur innerhalb des gewählten Temperaturbereichs, wobei das Ermöglichen einer Wahl des Benutzers bezüglich der Überwachung eines Temperaturbereichs die Voreinstellung eines ersten Temperaturbereichs über ein erstes mechanisch betätigbares Bedienelement und die Voreinstellung eines zweiten Temperaturbereichs über ein zweites mechanisch betätigbares Bedienelement umfasst, so dass nach einer Betätigung des ersten mechanisch betätigbaren Bedienelements der erste Temperaturbereich überwacht wird, und nach einer Betätigung des zweiten mechanisch betätigbaren Bedienelements der zweite Temperaturbereich überwacht wird.

Das Verfahren kann vorzugsweise mit einem erfindungsgemäßen Temperaturindikator durchgeführt werden. Ferner weist das Verfahren vorzugsweise die Schritte in der oben angegebenen Reihenfolge a), c) und e) auf.

Vorzugsweise kann das Verfahren zusätzlich die folgenden Schritte aufweisen: b) aktive Abfrage einer Wahl des Benutzers, und/oder d) Erkennen und Verarbeiten einer seitens des Benutzers erfolgenden Betätigung zum Starten der Überwachung des gewählten Temperaturbereichs, und zwar insbesondere in der gemäß Buchstabenvergabe ersichtlichen Reihenfolge.

Ein weiteres erfindungsgemäßes Verfahren zum Voreinstellen eines Temperaturbereichs eines Temperaturindikators, der eingerichtet ist zum fortwährenden Überwachen des Haltens einer in der Umgebung des Temperaturindikators herrschenden Temperatur innerhalb des voreingestellten Temperaturbereichs, umfasst: a) Ermöglichen einer Wahl des Benutzers bezüglich der Überwachung eines Temperaturbereichs über ein mechanisch betätigbares Bedienelement des Temperaturindikators, wobei über das Bedienelement die Voreinstellung eines zweiten Temperaturbereichs, welcher sich von einem ersten voreingestellten Temperaturbereich unterscheidet, anstelle des ersten Temperaturbereichs durchführbar ist, c) Erkennen und Verarbeiten der Betätigung oder Nichtbetätigung des Bedienelements durch den Benutzer und entsprechende Voreinstellung des somit gewählten und zu überwachenden Temperaturbereichs innerhalb des Temperaturindikators.

Vorzugsweise kann das Verfahren zusätzlich den folgenden Schritt aufweisen: b) aktive Abfrage einer Wahl des Benutzers, und zwar insbesondere in der gemäß Buchstabenvergabe ersichtlichen Reihenfolge.

Ein Temperaturindikator, insbesondere nach einer oder mehreren der vorgenannten Ausführungsformen, kann bevorzugt ferner Mittel aufweisen, die so angepasst sind, dass sie die Schritte eines der o.g. Verfahren ausführen.

Ein Computerprogramm nach einer oder mehreren der vorgenannten Ausführungsformen kann bevorzugt ferner Befehle umfassen, die bewirken, dass ein Temperaturindikator nach einer oder mehreren der vorgenannten Ausführungsformen die Schritte eines der o.g. Verfahren ausführt.

### Figuren

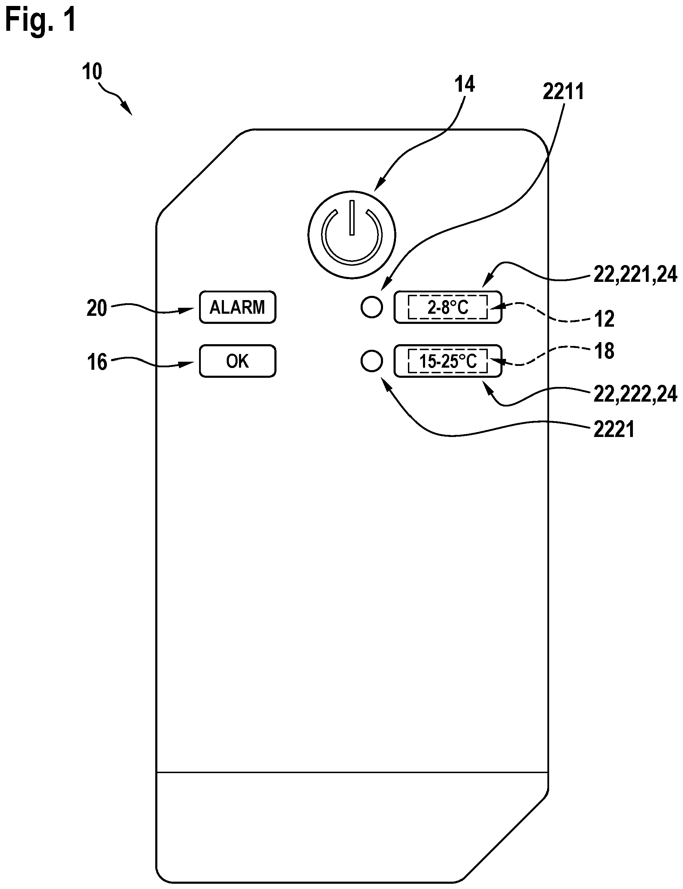

Ergänzend bzw. zusätzlich zu den bereits erörterten vorteilhaften Ausgestaltungen und Weiterbildungen der Lehre werden in der Zeichnung im Umfang der **Figuren 1 bis 6** dargestellte Ausführungsbeispiele von erfindungsgemäßen Vorrichtungen, Erzeugnissen, Verwendungen und Verfahren im Folgenden näher erläutert. Die anhand der Zeichnung erörterten Beispiele schränken die Erfindung jedoch nicht auf die gezeigten Beispiele ein. Bei der Erörterung der Ausführungsbeispiele anhand der Zeichnung werden auch im Allgemeinen bevorzugte Ausgestaltungen und Weiterbildungen der Lehre aufgezeigt.

Weiterbildungen der vorstehend beschriebenen vorteilhaften Ausgestaltungen mit Merkmalen der nachstehenden Ausführungsbeispiele bilden dabei genau wie Weiterbildungen der nachstehend beschriebenen Ausführungsbeispiele mit Merkmalen der vorstehend beschriebenen Ausgestaltungen ausdrücklich weitere vorteilhafte Ausgestaltungen der Erfindung, und sind damit Teil der vorliegenden Offenbarung.

In Bezug auf die nachstehende Erläuterung der Figuren ist allgemein darauf zu verweisen, dass bereits in vorangegangenen Figuren dargestellte und diesbezüglich bereits weiter oben erläuterte Bezugszeichen aus Gründen der Übersichtlichkeit in darauffolgenden Figuren zum Teil nicht erneut aufgetragen worden sind und/oder anhand dieser nachfolgenden Figuren zum Teil nicht erneut erläutert werden. Für die Erläuterung solcher Bezugszeichen und der zugehörigen technischen Merkmale wird zur Vermeidung von Wiederholungen daher vollumfänglich auf die jeweilige Beschreibung zu den entsprechenden vorangehenden Figuren verwiesen.

Es zeigen:
Figur 1 eine teils schematische Vorderansicht eines ersten bevorzugten Ausführungsbeispiels eines erfindungsgemäßen Temperaturindikators, hier als Einweg-Temperaturindikator ohne Datenschnittstelle,
Figur 2 eine teils schematische Vorderansicht eines zweiten bevorzugten Ausführungsbeispiels eines erfindungsgemäßen Temperaturindikators, hier als Einweg-Temperaturindikator mit Datenschnittstelle,
Figur 3 eine teils schematische Vorderansicht eines dritten bevorzugten Ausführungsbeispiels eines erfindungsgemäßen Temperaturindikators, hier als Mehrweg-Temperaturindikator mit Datenschnittstelle,
Figur 4 eine teils schematische Vorderansicht eines vierten bevorzugten Ausführungsbeispiels eines erfindungsgemäßen Temperaturindikators, hier als Mehrweg-Temperaturindikator mit Bildschirm,
Figur 5 ein Ablaufdiagramm eines bevorzugten Ausführungsbeispiels eines erfindungsgemäßen Verfahrens zum fortwährenden Überwachen einer Temperatur mittels eines Temperaturindikators, und
Figur 6 ein Ablaufdiagramm eines bevorzugten Ausführungsbeispiels eines erfindungsgemäßen Verfahrens zum Voreinstellen eines Temperaturbereichs eines Temperaturindikators.

**Fig. 1** zeigt eine teils schematische Vorderansicht eines ersten bevorzugten Ausführungsbeispiels eines erfindungsgemäßen Temperaturindikators 10, hier als Einweg-Temperaturindikator 10 ohne Datenschnittstelle.

Der Temperaturindikator 10 dient allgemein zum fortwährenden Überwachen des Haltens einer in der Umgebung des Temperaturindikators 10 herrschenden Temperatur innerhalb eines ersten voreingestellten Temperaturbereichs 12.

Dazu verfügt der Temperaturindikator 10 zunächst über eine Stromquelle, einen Mikroprozessor und einen Temperaturfühler. Diese Bauteile sind im Inneren des Temperaturindikators 10 angeordnet und daher in dieser Darstellung nicht zu sehen. Der Mikroprozessor steuert dabei die Ermittlung der Temperaturmesswerte. Dabei ist nach dem Auslösen der Messvorgangs eine geeignete Zeitverzögerung voreingestellt, z.B. 10-30 min. Ferner steuert der Mikroprozessor den Zeitabstand zwischen der Aufnahme aufeinanderfolgender Messwerte, z.B. 1 min.

Der Temperaturindikator 10 weist hier eine flache Formgebung in der Art eines Etiketts auf, er lässt sich daher direkt auf dem zu überwachenden Produkt anbringen, z.B. aufkleben. Der dargestellte Temperaturindikator 10 ist bspw. zur Überwachung der Temperatur von Blutkonserven geeignet, welche in den hierfür bekannten Beuteln gelagert werden.

Die Ausführungsbeispiele der folgenden Figuren hingegen weisen aufgrund der jeweiligen technischen Merkmale eine größere Dicke auf und sind eher dazu vorgesehen, zwischen den zu überwachenden Produkten angeordnet zu werden.

Der Temperaturindikator 10 weist einen Startknopf 14 auf, durch dessen Betätigung der Messvorgang auslösbar ist. Dabei ist eine o.a. Zeitverzögerung zwischen der Betätigung des Startknopfes 14 und dem tatsächlichen Beginn der Messwertaufnahme implementiert. Eine solche Zeitverzögerung gibt der Vorrichtung 10 ausreichend Zeit, sich vor der Aufnahme des ersten Messwerts am vorgesehenen Ort zu akklimatisieren.

Ferner weist der Temperaturindikator 10 eine erste optische Anzeige 16 für den regelgerechten Betrieb der Vorrichtung 10 innerhalb des voreingestellten Temperaturbereichs 12, 18 auf, und weist eine zweite optische Anzeige 20 für die Anzeige des nicht regelgerechten Betriebs (Alarm) auf, nämlich falls der voreingestellte Temperaturbereich 12, 18 während der Erfassung von Temperaturmesswerten nicht eingehalten worden ist. Die erste optische Anzeige 16 ist hier als grüne LED ausgestaltet, und die zweite optische Anzeige ist als rote LED ausgestaltet.

An dem Temperaturindikator 10 ist über ein mechanisch betätigbares Bedienelement 22 mindestens ein zweiter Temperaturbereich 18 voreinstellbar, welcher sich von dem ersten Temperaturbereich 12 unterscheidet.

Der erste Temperaturbereich 12 beträgt bei diesem Beispiel 2-8 °C, der zweite Temperaturbereich 18 beträgt hier 15-25 °C.

Nach Betätigen des Bedienelements 22 ist anstelle des ersten Temperaturbereichs 12 der zweite Temperaturbereich 18 durch den Temperaturindikator 10 überwachbar.

Bei diesem Beispiel sind ferner zwei mechanisch betätigbare Bedienelemente 22 realisiert.

Ein erstes Bedienelement 221 ist dabei zur Voreinstellung des ersten Temperaturbereichs 12 vorgesehen, und ein zweites Bedienelement 222 ist zur Voreinstellung des zweiten Temperaturbereichs 18 vorgesehen.

Insofern ist hier nach Betätigen des zweiten Bedienelements 222 anstelle des ersten Temperaturbereichs 12 der zweite Temperaturbereich 18 durch den Temperaturindikator 10 überwachbar, und umgekehrt ist nach Betätigen des ersten Bedienelements 221 anstelle des zweiten Temperaturbereichs 18 der erste Temperaturbereich 12 überwachbar.

Bei dem dargestellten Ausführungsbeispiel sind beide Bedienelemente 221, 222 jeweils als Taste 24 ausgestaltet. Der jeweilige Temperaturbereich 12, 18 ist auf dem jeweiligen Bedienelement 221, 222 aufgedruckt.

Zur weiteren Erleichterung der Bedienung und zur Vermeidung von Fehlbedienungen ist hier darüber hinaus dem ersten Bedienelement 221 eine erste optische Anzeige 2211 zugeordnet, und dem zweiten Bedienelement 222 ist eine zweite optische Anzeige 2221 zugeordnet. Beide optischen Anzeigen 2211, 2221 sind als LED realisiert. Durch die optischen Anzeigen 2211, 2221 lässt sich der jeweils voreingestellte und geltende Temperaturbereich 12, 18 optisch anzeigen, so dass Fehler bei der Voreinstellung sicher vermeidbar sind.

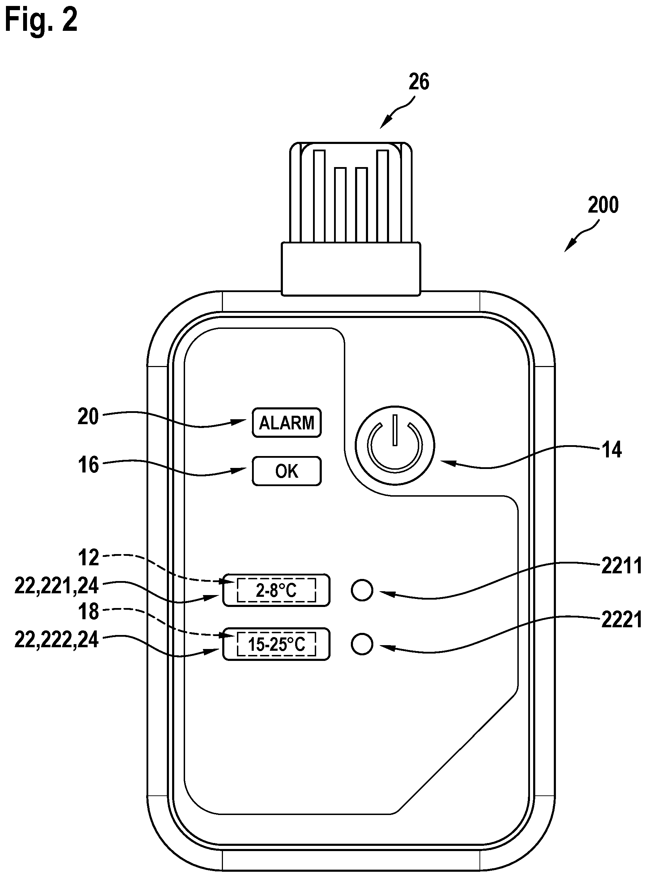

**Fig. 2** zeigt eine teils schematische Vorderansicht eines zweiten bevorzugten Ausführungsbeispiels eines erfindungsgemäßen Temperaturindikators 200, hier als Einweg-Temperaturindikator 200 mit Datenschnittstelle 26.

Der hier dargestellte Temperasturindikator 200 besitzt eine Funktionalität zur Aufzeichnung und zum Auslesen der gemessenen Temperaturwerte. Der Temperaturindikator 200 kann daher in diesem Beispiel auch als Temperatur-Datenlogger oder Temperaturlogger bezeichnet werden. Die Datenschnittstelle 26 ist hier als USB-Schnittstelle ausgestaltet und dient insbesondere zum Auslesen der gespeicherten Messwerte.

Ansonsten entsprechen die weiteren Merkmale und die jeweiligen Bezugszeichen jeweils denen aus Fig. 1, worauf nebst zugehöriger Beschreibung zur Vermeidung von Wiederholungen verwiesen wird.

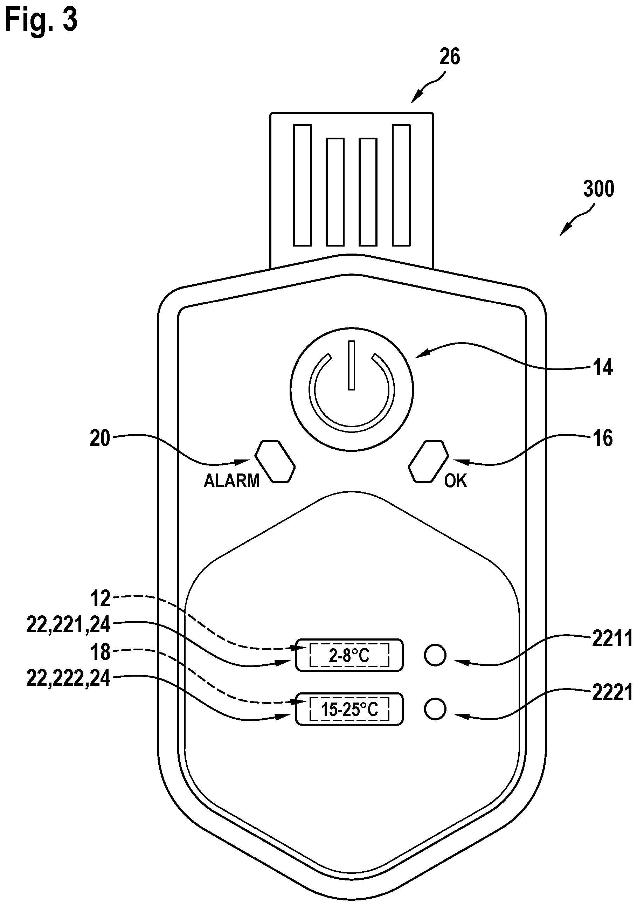

**Fig. 3** zeigt eine teils schematische Vorderansicht eines dritten bevorzugten Ausführungsbeispiels eines erfindungsgemäßen Temperaturindikators 300, welcher im Unterschied zu Fig. 2 als Mehrweg-Temperaturindikator 300 ausgestaltet ist, aber im Unterschied zu Fig. 1 ebenfalls mit einer Datenschnittstelle 26 ausgestattet ist.

Der hier dargestellte Temperaturindikator 300 besitzt demnach wie das Beispiel aus Fig. 2 eine Funktionalität zur Aufzeichnung und zum Auslesen der gemessenen Temperaturwerte. Der Temperaturindikator 300 kann daher auch in diesem Beispiel alternativ auch als Temperatur-Datenlogger oder Temperaturlogger bezeichnet werden. Die Datenschnittstelle 26 ist hier ebenfalls eine USB-Schnittstelle und dient insbesondere zum Auslesen der gespeicherten Messwerte.

Ansonsten entsprechen die weiteren Merkmale und die jeweiligen Bezugszeichen jeweils denen aus Fig. 1 und 2, worauf nebst zugehöriger Beschreibung zur Vermeidung von Wiederholungen verwiesen wird.

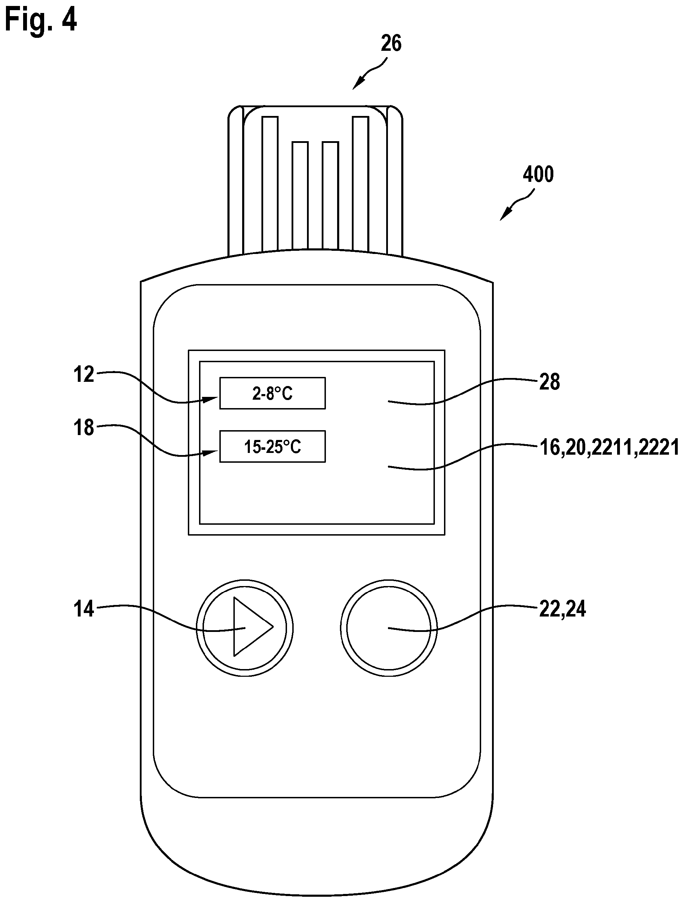

**Fig. 4** zeigt eine teils schematische Vorderansicht eines vierten bevorzugten Ausführungsbeispiels eines erfindungsgemäßen Temperaturindikators 400, hier als Mehrweg-Temperaturindikator 400 mit Datenschnittstelle 26 und mit Bildschirm 28.

Im Unterschied zu dem Beispiel aus Fig. 3 verfügt der Mehrweg-Temperaturindikator 400 gemäß dem hier dargestellten Ausführungsbeispiel über ein Bildschirm 28, welcher auch als Display bezeichnet werden könnte.

Der Bildschirm 28 dient dabei insbesondere zur Anzeige der zuletzt gemessenen Temperatur oder des Batteriezustands.

Der Bildschirm 28 bietet den Vorteil, dass der aktuell voreingestellte Temperaturbereich 12, 18 auf dem Bildschirm 28 angezeigt werden kann. Die Bereiche 12, 18 können während der Auswahl entsprechend auf dem Bildschirm 28 angezeigt werden. Durch Drücken des Startknopfs 14 kann der jeweilige Temperaturbereich 12, 18 dann für die folgende Messung festgelegt werden.

Je nach Funktionalität des Bildschirms 28, und in einer hier nicht dargestellten weiteren Ausgestaltung, können eines oder mehrere mechanisch betätigbare Bedienelemente 22, 221, 222 (vgl. Fig. 1-3) auf dem Bildschirm 28 des Temperaturindikators 400 dargestellt werden, und direkt auf dem Bildschirm 28, vergleichbar zu der Funktionalität eines Smartphones, mit dem Finger durch Berühren oder Wischen ausgewählt werden. In so einem Fall kann auf eine Taste 24 sogar verzichtet werden.

Aufgrund der Anzeigbarkeit beliebiger Daten und Zustände auf dem Bildschirm 28 dient der Bildschirm 28 bei diesem Ausführungsbeispiel gleichzeitig auch als erste optische Anzeige 16 für den vorschriftsmäßigen Betrieb (OK), als zweite optische Anzeige 20 für den nicht vorschriftsmäßigen Betrieb (Alarm), als erste optische Anzeige 2211 für den voreingestellten ersten Temperaturbereich 12, und als zweite optische Anzeige 2221 für den voreingestellten zweiten Temperaturbereich 18.

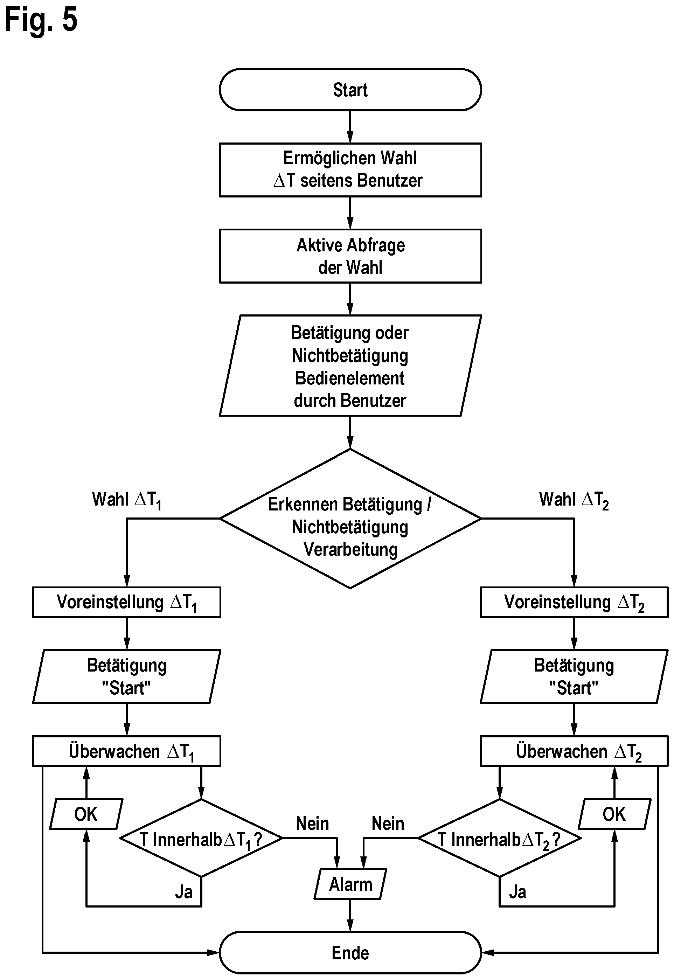

**Fig. 5** zeigt ein Ablaufdiagramm eines bevorzugten Ausführungsbeispiels eines erfindungsgemäßen Verfahrens zum fortwährenden Überwachen einer Temperatur mittels eines Temperaturindikators 10, 200, 300, 400.

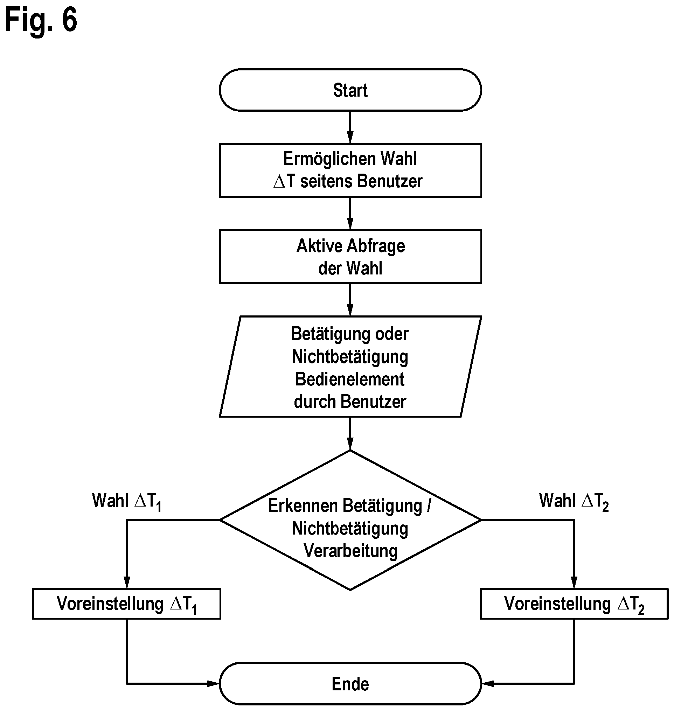

Sowohl hier als auch in der folgenden Fig. 6 werden der erste Temperaturbereich 12 als ΔT₁ und der zweite Temperaturbereich 18 als ΔT₂ bezeichnet.

Je nach beabsichtigter Ausgestaltung des Verfahrens und/oder je nach verwendetem Temperaturindikator 10, 200, 300, 400 kann der Schritt "Aktive Abfrage der Wahl" dabei ggf. auch entfallen.

Der Schritt "Betätigung START" meint eine Betätigung eines Starknopfs oder dergleichen Einrichtung durch den Benutzer. Je nach beabsichtigter Ausgestaltung des Verfahrens und/oder je nach verwendetem Temperaturindikator 10, 200, 300, 400 kann dieser Schritt dabei ggf. auch entfallen.

Ansonsten ist das im Ablaufdiagramm von Fig. 5 dargestellte Ausführungsbeispiel für sich gesehen selbstredend.

**Fig. 6** zeigt ein Ablaufdiagramm eines bevorzugten Ausführungsbeispiels eines erfindungsgemäßen Verfahrens zum Voreinstellen eines Temperaturbereichs eines Temperaturindikators 10, 200, 300, 400.

Je nach beabsichtigter Ausgestaltung des Verfahrens und/oder je nach verwendetem Temperaturindikator 10, 200, 300, 400 kann der Schritt "Aktive Abfrage der Wahl" dabei ggf. auch entfallen.

Ansonsten ist das im Ablaufdiagramm von Fig. 6 dargestellte Ausführungsbeispiel für sich gesehen selbstredend.

### Bezugszeichenliste

- 10, 200, 300, 400: Temperaturindikator, Vorrichtung
- 12: erster Temperaturbereich, ΔT₁
- 14: Startknopf
- 16: erste optische Anzeige (für Betrieb, OK)
- 18: zweiter Temperaturbereich, ΔT₂
- 20: zweite optische Anzeige (für Betrieb, Alarm)
- 22: mechanisch betätigbares Bedienelement
- 221: erstes (mechanisch betätigbares) Bedienelement
- 222: zweites (mechanisch betätigbares) Bedienelement
- 24: Taste (Bedienelement)
- 2211: erste optische Anzeige (für erstes Bedienelement / Voreinstellung erster Temperaturbereich)
- 2221: zweite optische Anzeige (für zweites Bedienelement / Voreinstellung zweiter Temperaturbereich)
- 26: Datenschnittstelle, Schnittstelle
- 28: Bildschirm, Display

## Patentansprüche

1. Temperaturindikator (10, 200, 300, 400) zum fortwährenden Überwachen des Haltens einer in der Umgebung des Temperaturindikators (10, 200, 300, 400) herrschenden Temperatur innerhalb eines ersten voreingestellten Temperaturbereichs (12), wobei der Temperaturindikator (10, 200, 300, 400) mechanisch betätigbare Bedienelemente (22, 221, 222) umfasst, wobei an dem Temperaturindikator (10, 200, 300, 400) über eines der mechanisch betätigbaren Bedienelemente (22, 221, 222) mindestens ein zweiter Temperaturbereich (18) voreinstellbar ist, welcher sich von dem ersten Temperaturbereich (12) unterscheidet, und welcher nach Betätigen des Bedienelements (22, 221, 222) anstelle des ersten Temperaturbereichs (12) durch den Temperaturindikator (10, 200, 300, 400) überwachbar ist,
**dadurch gekennzeichnet, dass** ein erstes mechanisch betätigbares Bedienelement (22, 221) zur Voreinstellung eines ersten Temperaturbereichs (12) vorgesehen ist, und ein zweites mechanisch betätigbares Bedienelement (22, 222) zur Voreinstellung eines zweiten Temperaturbereichs (18) vorgesehen ist, so dass nach einer Betätigung des ersten mechanisch betätigbaren Bedienelements (22, 221) der erste Temperaturbereich (12) überwacht wird, und nach einer Betätigung des zweiten mechanisch betätigbaren Bedienelements (22, 222) der zweite Temperaturbereich (18) überwacht wird.

2. Temperaturindikator (10, 200, 300, 400) nach Anspruch 1, **dadurch gekennzeichnet, dass** ein Bedienelement (22, 221, 222) eine Taste (24), einen Hebel oder einen Knopf aufweist.

3. Temperaturindikator (10, 200, 300, 400) nach Anspruch 1 oder 2, **dadurch gekennzeichnet, dass** weitere mechanisch betätigbare Bedienelemente (22, 221, 222) realisiert sind.

4. Temperaturindikator (10, 200, 300, 400) nach einem der Ansprüche 1 bis 3, **dadurch gekennzeichnet, dass** ein betätigtes Bedienelement (22, 221, 222) über dessen Betätigungszustand den derzeit voreingestellten Temperaturbereich (12, 18) anzeigt.

5. Temperaturindikator (10, 200, 300, 400) nach einem der Ansprüche 1 bis 4, **dadurch gekennzeichnet, dass** eine optische Anzeige (2211, 2221) für den aktuell voreingestellten Temperaturbereich (12, 18) realisiert ist.

6. Temperaturindikator (10, 200, 300, 400) nach einem der Ansprüche 1 bis 5, **dadurch gekennzeichnet, dass** der Temperaturindikator (10, 200, 300, 400) gleichzeitig Mittel zur Aufzeichnung der gemessenen Temperaturwerte aufweist.

7. Temperaturindikator (10, 200, 300, 400) nach einem der Ansprüche 1 bis 6, **dadurch gekennzeichnet, dass** der Temperaturindikator (10, 200, 300, 400) eine Datenschnittstelle (26) aufweist.

8. Temperaturindikator (10, 200, 300, 400) nach einem der Ansprüche 1 bis 7, **dadurch gekennzeichnet, dass** ein mechanisch betätigbares Bedienelement (22, 221, 222) als Bedienfeld auf einem Bildschirm des Temperaturindikators (10, 200, 300, 400) dargestellt ist.

9. Verfahren zum fortwährenden Überwachen, mittels eines Temperaturindikators (10, 200, 300, 400), insbesondere nach einem der vorhergehenden Ansprüche, des Haltens einer in der Umgebung des Temperaturindikators (10, 200, 300, 400) herrschenden Temperatur innerhalb eines voreingestellten Temperaturbereichs (12, 18), umfassend:
- Ermöglichen einer Wahl des Benutzers bezüglich der Überwachung eines Temperaturbereichs (12, 18) über ein mechanisch betätigbares Bedienelement (22, 221, 222) des Temperaturindikators (10, 200, 300, 400), wobei über das Bedienelement (22, 221, 222) die Voreinstellung eines zweiten Temperaturbereichs (18), welcher sich von einem ersten voreingestellten Temperaturbereich (12) unterscheidet, anstelle des ersten Temperaturbereichs (12) durchführbar ist,
- ggf. aktive Abfrage einer Wahl des Benutzers,
- Erkennen und Verarbeiten der Betätigung oder Nichtbetätigung des Bedienelements (22, 221, 222) durch den Benutzer und entsprechende Voreinstellung des somit gewählten und zu überwachenden Temperaturbereichs (12, 18),
- ggf. Erkennen und Verarbeiten einer seitens des Benutzers erfolgenden Betätigung zum Starten der Überwachung des gewählten Temperaturbereichs (12, 18),
- fortlaufendes Überwachen des Haltens der in der Umgebung des Temperaturindikators (10, 200, 300, 400) herrschenden Temperatur innerhalb des gewählten Temperaturbereichs (12, 18),
**dadurch gekennzeichnet, dass** das Ermöglichen einer Wahl des Benutzers bezüglich der Überwachung eines Temperaturbereichs (12, 18) die Voreinstellung eines ersten Temperaturbereichs (12) über ein erstes mechanisch betätigbares Bedienelement (22, 221) und die Voreinstellung eines zweiten Temperaturbereichs (18) über ein zweites mechanisch betätigbares Bedienelement (22, 222) umfasst, so dass nach einer Betätigung des ersten mechanisch betätigbaren Bedienelements (22, 221) der erste Temperaturbereich (12) überwacht wird, und nach einer Betätigung des zweiten mechanisch betätigbaren Bedienelements (22, 222) der zweite Temperaturbereich (18) überwacht wird.

10. Verfahren nach Anspruch 9, **dadurch gekennzeichnet, dass** ein mechanisch betätigbares Bedienelement (22, 221, 222) als Bedienfeld auf einem Bildschirm (28) des Temperaturindikators (10, 200, 300, 400) dargestellt wird.

11. Computerprogramm, umfassend Befehle, die bewirken, dass die Vorrichtung (10, 200, 300, 400) nach einem der Ansprüche 1 bis 8 die Verfahrensschritte nach Anspruch 9 oder 10 ausführt.

12. Computerlesbares Medium, auf dem das Computerprogramm nach Anspruch 11 gespeichert ist.

## Claims

1. A temperature indicator (10, 200, 300, 400) for continuously monitoring the maintenance of a temperature prevailing in the vicinity of the temperature indicator (10, 200, 300, 400) within a first preset temperature range (12), wherein the temperature indicator (10, 200, 300, 400) comprises mechanically actuable operating elements (22, 221, 222), wherein at least one second temperature range (18) can be preset on the temperature indicator (10, 200, 300, 400) via one of the mechanically actuable operating elements (22, 221, 222), wherein said second temperature range (18) differs from the first temperature range (12), and wherein said second temperature range (18) can be monitored by the temperature indicator (10, 200, 300, 400) instead of the first temperature range (12) after actuation of said operating element (22, 221, 222),
**characterized in that** a first mechanically actuable operating element (22, 221) is provided for presetting a first temperature range (12), and a second mechanically actuable operating element (22, 222) is provided for presetting a second temperature range (18), so that after actuation of the first mechanically actuable operating element (22, 221) the first temperature range (12) is monitored, and after actuation of the second mechanically actuable operating element (22, 222) the second temperature range (18) is monitored.

2. The temperature indicator (10, 200, 300, 400) according to claim 1, **characterized in that** an operating element (22, 221, 222) comprises a button (24), a lever or a knob.

3. The temperature indicator (10, 200, 300, 400) according to claim 1 or 2, **characterized in that** further mechanically actuable operating elements (22, 221, 222) are implemented.

4. The temperature indicator (10, 200, 300, 400) according to any one of claims 1 to 3, **characterized in that** an actuated operating element (22, 221, 222) indicates the currently preset temperature range (12, 18) via its actuation state.

5. The temperature indicator (10, 200, 300, 400) according to any one of claims 1 to 4, **characterized in that** an optical indicator (2211, 2221) for the currently preset temperature range (12, 18) is implemented.

6. The temperature indicator (10, 200, 300, 400) according to any one of claims 1 to 5, **characterized in that** the temperature indicator (10, 200, 300, 400) simultaneously comprises means for recording the measured temperature values.

7. The temperature indicator (10, 200, 300, 400) according to any one of claims 1 to 6, **characterized in that** the temperature indicator (10, 200, 300, 400) comprises a data interface (26).

8. The temperature indicator (10, 200, 300, 400) according to any one of claims 1 to 7, **characterized in that** a mechanically actuable operating element (22, 221, 222) is displayed as a control panel on a screen of the temperature indicator (10, 200, 300, 400).

9. A method for continuously monitoring, by means of a temperature indicator (10, 200, 300, 400), in particular according to any one of the preceding claims, the maintenance of a temperature prevailing in the vicinity of the temperature indicator (10, 200, 300, 400) within a preset temperature range (12, 18), comprising:
- enabling the user to select the monitoring of a temperature range (12, 18) via a mechanically actuable operating element (22, 221, 222) of the temperature indicator (10, 200, 300, 400), wherein the presetting of a second temperature range (18), which differs from a first preset temperature range (12), instead of the first temperature range (12), can be carried out via the operating element (22, 221, 222)
- optionally, active query of a user's selection,
- detecting and processing the actuation or non-actuation of the operating element (22, 221, 222) by the user and corresponding presetting of the selected temperature range (12, 18) to be monitored,
- optionally, detecting and processing an actuation by the user to start monitoring the selected temperature range (12, 18),
- continuous monitoring of the maintenance of the temperature prevailing in the vicinity of the temperature indicator (10, 200, 300, 400) within the selected temperature range (12, 18),
**characterized in that** enabling a user's selection regarding the monitoring of a temperature range (12, 18) comprises the presetting of a first temperature range (12) via a first mechanically actuable operating element (22, 221), and the presetting of a second temperature range (18) via a second mechanically actuable operating element (22, 222), so that after actuation of the first mechanically actuable operating element (22, 221) the first temperature range (12) is monitored, and after actuation of the second mechanically actuable operating element (22, 222) the second temperature range (18) is monitored.

10. The method according to claim 9, **characterized in that** a mechanically actuable operating element (22, 221, 222) is displayed as a control panel on a screen (28) of the temperature indicator (10, 200, 300, 400).

11. A computer program comprising instructions that cause the device (10, 200, 300, 400) according to any one of claims 1 to 8 to perform the steps of the method according to claim 9 or 10.

12. A computer-readable medium having stored thereon the computer program according to claim 11.

## Revendications

1. Indicateur de température (10, 200, 300, 400) pour surveiller en continu le maintien d'une température régnant dans l'environnement de l'indicateur de température (10, 200, 300, 400) à l'intérieur d'une première plage de température prédéfinie (12), l'indicateur de température (10, 200, 300, 400) comprenant des éléments de commande actionnables mécaniquement (22, 221, 222), et dans lequel au moins une deuxième plage de température (18) pouvant être préréglée sur l'indicateur de température (10, 200, 300, 400) via l'un des éléments de commande actionnables mécaniquement (22, 221, 222), qui diffère de la première plage de température (12), et qui, après actionnement de l'élément de commande (22, 221, 222), peut être surveillée par l'indicateur de température (10, 200, 300, 400) à la place de la première plage de température (12),
**caractérisé en ce qu'**un premier élément de commande actionnable mécaniquement (22, 221) est prévu pour prérégler une première plage de température (12), et un deuxième élément de commande actionnable mécaniquement (22, 222) est prévu pour prérégler une deuxième plage de température (18), de sorte qu'après actionnement du premier élément de commande actionnable mécaniquement (22, 221), la première plage de température (12) est surveillée, et qu'après actionnement du deuxième élément de commande actionnable mécaniquement (22, 222), la deuxième plage de température (18) est surveillée.

2. Indicateur de température (10, 200, 300, 400) selon la revendication 1, **caractérisé en ce qu'**un élément de commande (22, 221, 222) comporte une touche (24), un levier ou un bouton.

3. Indicateur de température (10, 200, 300, 400) selon la revendication 1 ou 2, **caractérisé en ce que** d'autres éléments de commande actionnables mécaniquement (22, 221, 222) sont réalisés.

4. Indicateur de température (10, 200, 300, 400) selon l'une des revendications 1 à 3, **caractérisé en ce qu'**un élément de commande actionné (22, 221, 222) indique la plage de température actuellement préréglée (12, 18) via son état d'actionnement.

5. Indicateur de température (10, 200, 300, 400) selon l'une des revendications 1 à 4, **caractérisé en ce qu'**un affichage visuel (2211, 2221) pour la plage de température actuellement préréglée (12, 18) est réalisé.

6. Indicateur de température (10, 200, 300, 400) selon l'une des revendications 1 à 5, **caractérisé en ce que** l'indicateur de température (10, 200, 300, 400) comporte en même temps des moyens pour enregistrer les valeurs de température mesurées.

7. Indicateur de température (10, 200, 300, 400) selon l'une des revendications 1 à 6, **caractérisé en ce que** l'indicateur de température (10, 200, 300, 400) comporte une interface de données (26).

8. Indicateur de température (10, 200, 300, 400) selon l'une des revendications 1 à 7, **caractérisé en ce qu'**un élément de commande actionnable mécaniquement (22, 221, 222) est représenté sous forme de panneau de commande sur un écran de l'indicateur de température (10, 200, 300, 400).

9. Procédé de surveillance continue, au moyen d'un indicateur de température (10, 200, 300, 400), en particulier selon l'une des revendications précédentes, du maintien d'une température régnant dans l'environnement de l'indicateur de température (10, 200, 300, 400) dans une plage de température prédéfinie (12, 18), comprenant :
- permettre à l'utilisateur de choisir la surveillance d'une plage de température (12, 18) via un élément de commande actionnable mécaniquement (22, 221, 222) de l'indicateur de température (10, 200, 300, 400), l'élément de commande (22, 221, 222) permettant de prérégler une deuxième plage de température (18), qui diffère d'une première plage de température préréglée (12), à la place de la première plage de température (12),
- le cas échéant, demande active d'une sélection de l'utilisateur,
- détection et traitement de l'actionnement ou de la non-actionnement de l'élément de commande (22, 221, 222) par l'utilisateur, et préréglage correspondant de la plage de température (12, 18) ainsi sélectionnée et à surveiller,
- le cas échéant, détection et traitement d'une action de l'utilisateur pour démarrer la surveillance de la plage de température sélectionnée (12, 18),
- surveillance continue du maintien de la température régnant dans l'environnement de l'indicateur de température (10, 200, 300, 400) à l'intérieur de la plage de température sélectionnée (12, 18),
**caractérisé en ce que** la possibilité pour l'utilisateur de choisir la surveillance d'une plage de température (12, 18) comprend le préréglage d'une première plage de température (12) via un premier élément de commande actionnable mécaniquement (22, 221), et comprend le préréglage d'une deuxième plage de température (18) via un deuxième élément de commande actionnable mécaniquement (22, 222), de sorte qu'après actionnement du premier élément de commande actionnable mécaniquement (22, 221) la première plage de température (12) est surveillée, et qu'après actionnement du deuxième élément de commande actionnable mécaniquement (22, 222) la deuxième plage de température (18) est surveillée.

10. Procédé selon la revendication 9, **caractérisé en ce qu'**un élément de commande actionnable mécaniquement (22, 221, 222) est représenté sous forme de panneau de commande sur un écran (28) de l'indicateur de température (10, 200, 300, 400).

11. Programme d'ordinateur comprenant des instructions qui conduisent l'appareil (10, 200, 300, 400) selon l'une des revendications 1 à 8 à exécuter les étapes du procédé selon la revendication 9 ou 10.

12. Support lisible par ordinateur, sur lequel est enregistré le programme d'ordinateur selon la revendication 11.
